# EUROPÄISCHE PATENTSCHRIFT

(11) **EP 1 836 141 B1**
(45) Veröffentlichungstag und Bekanntmachung des Hinweises auf die Patenterteilung: **10.10.2012**
(21) Anmeldenummer: 05715619.2
(22) Anmeldetag: 01.03.2005
(51) Int. Cl.: C04B 14/10, C04B 20/06

(54) **VERFAHREN ZUR HERSTELLUNG VON METAKAOLIN-PARTIKELN**
METHOD FOR PRODUCING METAKAOLIN PARTICLES
PROCEDE DE PRODUCTION DE PARTICULES DE METAKAOLIN

(30) Priorität: 24.11.2004 DE 102004056781
(43) Veröffentlichungstag der Anmeldung: 26.09.2007
(73) Patentinhaber: DENNERT PORAVER GmbH, 92353 Postbauer-Heng (DE)
(72) Erfinder: DENNERT, Hans-Veit, 96132 Schlüsselfeld (DE)
(74) Vertreter: Rau, Manfred
(86) Internationale Anmeldenummer: PCT/EP2005/002122
(87) Internationale Veröffentlichungsnummer: WO 2006/056240

(56) Entgegenhaltungen:
- WO-A-00/61512
- DE-B3- 10 315 865
- DE-C1- 19 608 841

## Beschreibung

Die Erfindung betrifft ein Verfahren zur Herstellung von Metakaolin-Partikeln.

Zum Hintergrund der Erfindung ist festzuhalten, dass Metakaolin chemisch ein kalziniertes Kaolin ist. Der Hauptbestandteil des Kaolins ist das Tonmaterial Kaolinit, bei dem es sich um ein hydratisiertes Aluminium-Disilikat handelt. Zur Herstellung von Metakaolin wird herkömmlicherweise Kaolin bei Temperaturen von 500° bis 800° C über einen bestimmten Zeitraum dehydrolisiert.

Ferner ist festzuhalten, dass Metakaolin-Partikel als Zuschlagstoff in Baustoff-Mischungen, wie beispielsweise Fliesenkleber-Mischungen, verwendet werden.

Die vorstehenden Sachverhalte sind aus der DE 103 15 865 B3 bekannt, die sich mit der Verwendung einer ein hydraulisches Bindemittel enthaltenden Mischungszusammensetzung als Fliesenkleber beschäftigt. Letzterer enthält eine Metakaolin-Komponente mit einer Partikelgröße zwischen 0,01 µm und 50 µm.

Üblicherweise wird das Metakaolin in einem eigenen Herstellungsprozess produziert, was naturgemäß in anlagetechnischer Hinsicht sowie unter dem Aspekt möglichst ökonomischer und ökologisch ressourcenschonender Vorgehensweise im Wirtschaftsleben aufwändig ist. Ein solcher Prozess ist aus das DE196 08 841 C1 bekannt und basiert auf der Herstellung von Metakaolin aus kaolinitischen Ton, der nach Zeckleinerung und thermischer Trocknung kalziniert wird. Dies erfolgt in einem Pulsationsreaktor in Bruchteilen von Sekunden bei Temperaturen von 700°C bis 1086°C. Das erhaltene Metakaolin wird am Ausgang des Reaktors auf unter 600°C abgekühlt.

Zur Lösung der oben erörterten Problematik schlägt die Erfindung ein Verfahren zur Herstellung von Metakaolin-Partikeln vor, das folgende Verfahrensschritte aufweist:
- Bereitstellen eines granulatförmigen, blähfähigen Leichtzuschlagstoffes,
- Zugeben von Kaolin-Partikeln zu dem Leichtzuschlag-Granulat als Trennmittel,
- Eingeben der Trennmittel-Granulat-Mischung in einen Ofen,
- thermisches Beaufschlagen der Trennmittel-Granulat-Mischung zum Blähen des Leichtzuschlagstoffes unter einhergehender Kalzinierung der Kaolin-Partikel zu Metakaolin-Partikeln, und
- Separation der Metakaolin-Partikel vom Leichtzuschlagstoff-Granulat
- wobei als Kaolin-Partikel Neu-Kaolin-Partikel und/order rückgeführte Metakaolin-Partikel verwendet werden.

Dieses Verfahren setzt auf die Herstellung von blähfähigen Leichtzuschlagstoffen und insbesondere Blähglasgranulat auf. Dort muss für das Blähen der getrockneten Grünkörper ein Trennmittel zugegeben werden, das ein Zusammenbacken der Blähglasgranulat-Partikel verhindert. Im Rahmen der Erfindung wurde nun festgestellt, dass bei Einsatz von Kaolin-Partikeln als Trennmittel durch die thermische Beaufschlagung der Trennmittel-Granulat-Mischung für das Blähen des Leichtzuschlagstoffes eine Kalzinierung der Kaolin-Partikel erfolgt und quasi als Nebeneffekt Metakaolin-Partikel entstehen. Diese können separiert und auf diese eigenständige Weise hergestellt als Produkt weiterverwendet werden. Erkennbar ist kein separater Herstellungsprozess notwendig, sondern die Metakaolin-Partikel entstehen als Abfallprodukt ohne separaten Energieaufwand für die Kalzinierung des Ausgangsstoffes Kaolin. Insoweit wird im Rahmen des erfindungsgemäßen Herstellungsverfahrens das Metakaolin in einer weiteren Funktion als Trennmittel verwendet, sodass dessen Ausnutzung insgesamt sehr effizient ist. Es können die durch den Einsatz von Kaolin als Trennmittel beim Blähen von Blähglasgranulat entstandenen Metakaolin-Partikel nämlich als Zuschlagstoff in Baustoff-Mischungen, insbesondere als so genannte Nano-Partikel in Fliesenkleber-Mischungen einer weiteren Verwendung zugeführt werden.

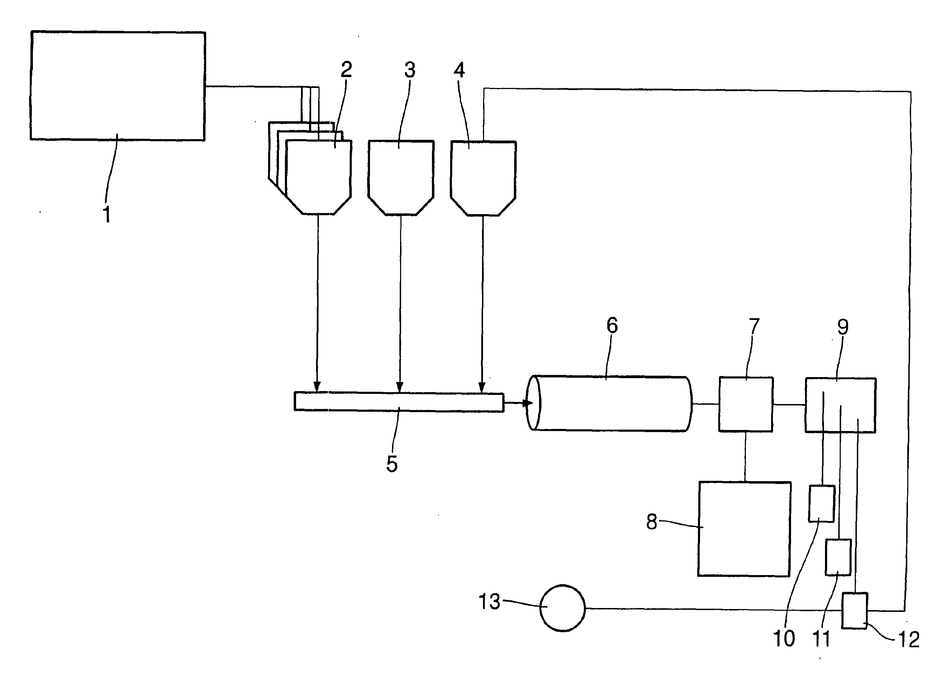

Bevorzugte Ausführungsformen des erfindungsgemäßen Herstellungsverfahrens sind in den Unteransprüchen angegeben, deren Merkmale, Einzelheiten und Vorteile in der folgenden Beschreibung anhand der beigefügten Zeichnung näher erläutert werden.

Diese Figur zeigt ein Flussdiagramm des Herstellungsverfahrens.

Der Herstellungsprozess für Metakaolin-Partikel setzt auf die ansonsten übliche Produktion von Blähglas-Granulat auf, bei der ein granulatförmiges, blähfähiges Grüngranulat bereitgestellt wird. Dieser Prozess, der in der Figur durch den Verfahrensblock 1 versinnbildlicht ist, erfolgt in üblicher Weise durch Nass-Mahlen von Recyclingglas zu einem feinen Glasmehl, Versetzen dieses Glasmehls mit Bindemittel- und Blähkomponenten, Mischen und Granulieren dieses Ansatzes sowie Trocknen der entstandenen Granulatkörper. Die letzten beiden Schritte können entweder getrennt auf einem Granulierteller und in einer anschließenden Trockenstufe oder gemeinsam mit Hilfe eines Sprühturms vorgenommen werden. Das getrocknete Grüngranulat wird klassiert in Korngrößenbereiche in ersten Silos 2 bevorratet. Gleichermaßen werden in einem Silo 3 Neu-Kaolin-Partikel und in einem Silo 4 in noch zu erläuternder Weise hergestellte und rückgeführte Metakaolin-Partikel bevorratet.

Bei den Neu-Kaolin-Partikeln handelt es sich um geschlämmtes Kaolin mit einer mittleren Teilchengröße von 3,0 µm, deren Korngröße zu 98 MA.-% unter 20 µm liegt. 40 MA.-% der Partikel weisen eine Größe unter 2 µm auf. In der chemischen Analyse bestehen die Neu-Kaolin-Partikel zu etwa 50 MA.-% aus Siliziumdioxid und 36 MA.-% Aluminiumoxid.

Grundsätzlich könnte für den Herstellungsprozess für die Metakaolin-Partikel nur mit Neu-Kaolin-Partikeln aus dem Silo 3 und dem Grüngranulat aus dem Silo 2 gearbeitet werden, indem diese beiden Komponenten über eine Vibrationsrinne 5 gemischt und kontinuierlich in einen Drehrohrofen 6 eingegeben werden, wo bei einer Temperatur im Bereich zwischen 800° und 900° C einerseits der Blähvorgang des Grüngranulats zum eigentlichen Blähglasgranulat und andererseits die Kalzinierung der als Trennmittel fungierenden Neu-Kaolin-Partikel zu Metakaolin-Partikeln stattfindet. Die Auslaufprodukte des Drehrohrofens 6 werden dann über einen Wirbelschichtkühler 7 geführt, wo durch Luftstromaustragung eine Separation einerseits der Blähglasgranulat-Partikel mit einer Korngröße über 300 µm von andererseits einer Fraktion bestehend aus Blähglasgranulat-Partikeln einer Korngröße unter 300 µm und der eine Korngröße von unter 50 µm aufweisenden Metakaolin-Partikel stattfindet. Das erstgenannte Blähglasgranulat wird zu der durch den Block 8 angedeuteten Weiterverarbeitung, nämlich Klassierung, Bevorratung und Verpackung in Säcke, sogenannte "big bags" oder zum Abtransport in Silofahrzeugen verbracht. Die zweitgenannte Fraktion wird über eine zweistufige Windsichtung mit den Trenngrenzen 50 µm und 110 µm geführt und damit in drei Bestandteile, nämlich Blähglasgranulat einer Körnung von ca. 100 µm bis 300 µm - Block 10 -, einer Körnung von ca. 40 µm bis 125 µm - Block 11 - und die Metakaolin-Partikel mit einer Körnung von im Wesentlichen unter 50 µm Block 12 - getrennt. Letztere könnten von dieser Prozessstufe aus als Produkt abgeführt werden, allerdings werden sie aus ökonomischen Gründen bei der Blähglasgranulat-Herstellung als Trennmittel mehrfach wiederverwendet und daher von der Stufe 12 in das Vorratssilo 4 zurückgeführt.

Chemische Analysen der so gehandhabten Metakaolin-Partikel haben ergeben, dass sich darin Alkalioxid-Partikel aus dem Blähglasgranulat anreichern. Als Obergrenze für die Rückführung der Metakaolin-Partikel haben sich 12 MA.-% Alkalioxid-Anteil herausgestellt. Mit Erreichen dieses Mengenanteils gilt das Metakaolin für die Trennmittelfunktion als verbraucht und kann dann als anderweitig verwertbares Metakaolin-Partikelprodukt ausgeschleust werden - Block 13 -.

Das Verhältnis der Zuschläge an Neu-Kaolin-Partikeln zu Metakaolin-Partikeln im Trennmittel in dem Drehrohrofen 6 hängt von der Korngröße des zu blähenden Granulates ab. So werden für die großen Körnungen, nämlich 4 bis 8 mm und 8 bis 16 mm, des Blähglasgranulates nur rückgeführte Metakaolin-Partikel in einem Mengenanteil von 12% bis 15% an der gesamten Trennmittel-Granulat-Mischung zugegeben. Je feiner die zu blähende Granulatkörnung wird, desto größer wird der Anteil an Trennmittel insgesamt und an Neu-Kaolin-Partikeln im Trennmittel. So werden für die Blähglasgranulat-Korngröße 0,1 mm bis 0,3 mm etwa 25% bis 30% Kaolin-Trennmittelanteile an der gesamten Trennmittel-Granulat-Mischung zugegeben, wobei das Verhältnis von Neu-Kaolin-Partikeln zu Metakaolin-Partikeln im Bereich von 30 : 70 bis 40 : 60 liegt.

Die auf Grund des erörterten Herstellungsverfahrens zur Verfügung gestellten Metakaolin-Partikel mit einer Korngröße von unter 50 µm können zusammen mit den Blähglasgranulat-Partikeln der Körnungen 40 µm bis 125 µm und 100 µm bis 300 µm, wie sie in den Schritten 10 und 11 bei der Windsichtung anfallen, als vorproduziertes Zuschlagstoffgemenge in Baustoff-Mischungen, wie beispielsweise den Fliesenkleber gemäß der eingangs genannten DE 103 15 865 B3, eingebracht werden.

## Patentansprüche

1. Verfahren zur Herstellung von Metakaolinpartikeln mit folgenden Verfahrensschritten:
- Bereitstellen eines granulatförmigen, blähfähigen Leichtzuschlagstoffes,
- Zugeben von Kaolin-Partikeln zu dem Leichtzuschlagstoff-Granulat als Trennmittel,
- Eingeben der Trennmittel-Granulat-Mischung in einen Ofen,
- thermisches Beaufschlagen der Trennmittel-Granulat-Mischung zum Blähen des Leichtzuschlagstoffes unter einhergehender Kalzinierung der Kaolin-Partikel zu Metakaolin-Partikeln, und
- Separation der Metakaolin-Partikel vom Leichtzuschlagstoff-Granulat,
- wobei als Kaolin-Partikel Neu-Kaolin-Partikel und/oder rückgeführte Metakaolin-Partikel verwendet werden.

2. Verfahren nach Anspruch 1, **dadurch gekennzeichnet, dass** der Mengenanteil von Neu-Kaolin-Partikeln an der Gesamtmenge des Trennmittels bis zu 40 % beträgt.

3. Verfahren nach Anspruch 1 oder 2, **dadurch gekennzeichnet, dass** die separierten Metakaolin-Partikel ab einem Alkalioxid-Massenanteil von etwa 12 MA.-% nicht mehr für die Rückführung eingesetzt werden.

4. Verfahren nach Anspruch 1 oder 2, **dadurch gekennzeichnet, dass** die Neu-Kaolin-Partikel einen hohen Aluminiumoxid-Anteil von vorzugsweise etwa 35 MA.-% aufweisen.

5. Verfahren nach einem der vorgenannten Ansprüche, **dadurch gekennzeichnet, dass** der Mengenanteil von Kaolin-Partikeln an der Gesamtmenge der Trennmittel-Granulat-Mischung abhängig von der Korngröße des Leichtzuschlagstoff-Granulats zwischen 12 % und 30 % beträgt.

6. Verfahren nach einem der vorgenannten Ansprüche, **dadurch gekennzeichnet, dass** die thermische Beaufschlagung der Trennmittel-Granulat-Mischung bei einer Temperatur von 800° C bis 900° C vorzugsweise in einem kontinuierlich arbeitenden Drehrohrofen erfolgt.

7. Verfahren nach einem der vorgenannten Ansprüche, **dadurch gekennzeichnet, dass** die Separation der Metakaolin-Partikel zweistufig vorzugsweise durch eine Luftstromaustragung in einem Wirbelschichtkühler und eine Sichtung erfolgt.

8. Verfahren nach Anspruch 7, **dadurch gekennzeichnet, dass** die separierten Metakaolin-Partikel eine Korngröße von unter etwa 50 µm aufweisen.

## Claims

1. Method for the production of metakaolin particles with the following method steps:
- preparing a lightweight expandable aggregate material in granulate form;
- adding kaolin particles to the lightweight aggregate as a separating agent;
- feeding the separating agent-granulate mixture through a kiln;
- exposing the separating agent-granulate mixture to thermal energy, in order to expand the lightweight aggregate material, with simultaneous calcination of the kaolin particles into metakaolin particles; and
- separating the metakaolin particles from the lightweight aggregate granulate,
- wherein the kaolin particles added consist of new kaolin particles and/or returned metakaolin particles.

2. Method according to claim 1, **characterized in that** the proportion of new kaolin particles in the total amount of the separation agent is anywhere up to 40%.

3. Method according to claim 1 or 2, **characterized in that** the separated metakaolin particles are not returned any longer, once their alkali oxide content has reached 12 mass %.

4. Method according to claim 1 or 2, **characterized in that** the new kaolin particles exhibit a high proportional content of aluminium oxide, preferably as high as 35 mass %.

5. Method according to one of the preceding claims, **characterized in that** the proportionate amount of kaolin particles in the total separating agent-granulate mixture is dependent on the grain size of the lightweight aggregate granulate and varying between 12% and 30%.

6. Method according to one of the preceding claims, **characterized in that** exposing the separation agent-granulate mixture to thermal energy at a temperature of 800°C to 900°C preferably is delivered in a continuously operating rotary furnace.

7. Method according to one of the preceding claims, **characterized in that** separating the metakaolin particles is achieved in two stages preferably by air stream movement in a fluid bed cooler and by wind sorting.

8. Method according to claim 7, **characterized in that** the separated metakaolin particles exhibit a grain size below about 50 µm.

## Revendications

1. Procédé de production de particules de métakaolin comprenant les étapes de procédé suivantes :
- préparation d'un agrégat léger pouvant être intumescent en forme de granulés,
- addition de particules de kaolin aux granulés d'agrégat léger en tant que démoulant,
- approvisionnement du mélange démoulant-granulés dans un four
- application de chaleur au mélange démoulant-granulés afin de faire gonfler l'agrégat léger par une calcination, transformant les particules de kaolin en particules de métakaolin, et
- séparation des particules de métakaolin des granulés d'agrégat léger,
- où, en tant que particules de kaolin, des particules de kaolin nouvelles et des particules de métakaolin recyclées sont employées.

2. Procédé selon la revendication 1 **caractérisé en ce que** la proportion de particules de kaolin nouvelles dans la quantité totale de démoulant atteint jusqu'à 40 %.

3. Procédé selon les revendications 1 ou 2 **caractérisé en ce que** les particules de métakaolin séparées à partir d'une proportion en masse d'oxyde alcalin d'environ 12 % en analyse volumétrique ne sont plus employées pour le recyclage.

4. Procédé selon les revendications 1 ou 2 **caractérisé en ce que** les particules de kaolin nouvelles présentent une forte proportion d'oxyde d'aluminium de préférence d'environ 35 % en analyse volumétrique.

5. Procédé selon l'une des revendications précitées **caractérisé en ce que** la proportion en masse de particules de kaolin par rapport à la masse totale de mélange démoulant-granulés s'élève entre 12 % et 30 % en fonction de la taille des grains de granulés d'agrégat léger.

6. Procédé selon l'une des revendications précitées **caractérisé en ce que** l'application de chaleur au mélange démoulant-granulés à une température de 800 °C à 900 °C s'effectue de préférence dans un four rotatif travaillant en continu.

7. Procédé selon l'une des revendications précitées **caractérisé en ce que** la séparation des particules de métakaolin s'effectue en deux étapes, de préférence par un système de décharge de courant d'air dans un refroidisseur à lit fluidisé et un tamisage.

8. Procédé selon la revendication 7 **caractérisé en ce que** les particules de métakaolin séparées présentent une taille de grains de moins environ 50 µm.
